(19) Europäisches Patentamt
European Patent Office
Office européen des brevets

(11) Veröffentlichungsnummer: **0 393 549 A2**

(12) # EUROPÄISCHE PATENTANMELDUNG

(21) Anmeldenummer: **90107152.2**

(51) Int. Cl.$^5$: **C08G 69/40**

(22) Anmeldetag: **14.04.90**

(30) Priorität: **19.04.89 DE 3912769**

(43) Veröffentlichungstag der Anmeldung:
**24.10.90 Patentblatt 90/43**

(84) Benannte Vertragsstaaten:
**BE CH DE ES FR GB IT LI NL**

(71) Anmelder: **BASF Aktiengesellschaft**
**Carl-Bosch-Strasse 38**
**D-6700 Ludwigshafen(DE)**

(72) Erfinder: **Pipper, Gunter**
**Schlangenthaler Weg 10**
**D-6702 Bad Duerkheim(DE)**
Erfinder: **Kock, Eckhard Michael, Dr.**
**Merowingerstrasse 8**
**D-6701 Fussgoenheim(DE)**

(54) **Verfahren zur Herstellung von linearen Polyamiden mit Etherbrücken in der Polymerkette.**

(57) Verfahren zur kontinuierlichen Herstellung von linearen Polyamiden mit Etherbrücken in der Polymerkette, wobei man wäßrige Lösungen von Salzen aus Diaminen und äquimolaren Mengen und Dicarbonsäuren, die zusätzlich Lactame oder Aminocarbonsäuren enthalten können, wobei 1 bis 80 % der polyamidbildenden Einheiten, bezogen auf die Summe der polyamidbildenden Einheiten, Diamine und/oder Dicarbonsäuren sind, die nach Abzug der Aminogruppen oder Carboxylgruppen Reste der Formel I

$$-R^1-O-\left[R^2-O\right]_n-R^3- \qquad \mathrm{I}$$

haben, in der $R^1$ bis $R^3$ gleich oder verschieden sind und jeweils einen Alkylenrest mit 2 bis 6 Kohlenstoffatomen, der Alkylgruppen mit 1 bis 3 Kohlenstoffatomen als Substituenten haben kann, bezeichnen und n für eine ganze Zahl von 1 bis 60 steht in kurzer Zeit durch eine Vorpolymerisationszone leitet und das erhaltene Gemisch aus Präpolymeren und Dampf innig mischt und dann trennt, aus den anfallenden Brüden eine wäßrige Aminlösung abtrennt und in die Vorkondensationszone zurückführt, das Präpolymere weiter kondensiert und unter Entfernung von Wasserdampf austrägt, verfestigt und granuliert, das Polymergranulat in fester Phase in Inertgasatmosphäre bis zur gewünschten Viskosität weiter kondensiert.

EP 0 393 549 A2

## Verfahren zur Herstellung von linearen Polyamiden mit Etherbrücken in der Polymerkette

Aus der DE-OS 24 54 120 ist ein Verfahren bekannt, bei dem man Salze aus Dioxaalkandiaminen und Adipinsäure zusammen mit AH-Salz bei einer Temperatur von 250°C diskontinuierlich für einen Zeitraum von 6 Stunden unter autogenem Druck kondensiert und nach Entspannen ein Copolymeres erhält. Ein solches Verfahren ist für die technische Realisierung wenig geeignet.

Nach einem anderen in der US-PS 3 509 106 bekannten Verfahren werden Copolyamide aus einem Salz von Adipinsäure mit Ethylen-bis(3-aminopropyl)-ether und Nylon-6,6-Salz durch Erhitzen auf eine Temperatur unterhalb 250°C unter erhöhtem Druck in einer ersten Stufe und anschließende Kondensation bei einer 10 bis 60°C höheren Temperatur unter vermindertem Druck bei einer Kondensationsdauer von 3 Stunden und mehr erhalten. Die bisher bekannten Verfahren haben den Nachteil, daß die so hergestellten Polyamide während der Kondensation geschädigt werden und Verfärbungen der Polyamide auftreten.

Aus der DE-OS 26 58 714 ist auch schon bekannt, daß man Polyamide durch Kondensation von Polytetrahydrofuran mit Carboxylendgruppen Hexamethylendiamin und Caprolactam oder anderen Polyamid bildenden Verbindungen unter erhöhten Druck bei einer Temperatur von 230°C und anschließende Kondensation im Vakuum über einen Zeitraum von mehreren Stunden erhält. Diesem Verfahren haften ebenfalls die obengenannten Nachteile an. Ferner haben Polyamidbausteine auf Basis Polytetrahydrofuran die Tendenz unter Bildung von Tetrahydrofuran zu spalten. Darüber hinaus bedarf es langer Reaktionszeiten um hohe Molekulargewichte zu erreichen. Schließlich neigen solche Polyamide leicht zum Entmischen.

Es war deshalb die technische Aufgabe gestellt, ein kontinuierliches Verfahren zur Herstellung von Polyamiden mit Etherbrücken in der Polymerkette zur Verfügung zu stellen, bei dem die Schädigung des Polyamids und eine Verfärbung möglichst vermieden wird, in dem hohe Molekulargewichte erreicht werden und die Spaltung der Etherbrücke vermieden wird.

Diese Aufgabe wird gelöst in einem Verfahren zur kontinuierlichen Herstellung von linearen Polyamiden mit Etherbrücken in der Polymerkette, bei dem man wäßrige Lösungen von Salzen aus Diaminen und äquimolaren Mengen an Dicarbonsäuren, die zusätzlich Lactame oder die entsprechenden Aminocarbonsäuren enthalten können, wobei 1 bis 80 % der polyamidbildenden Einheiten, bezogen auf die Summe der polyamidbildenden Einheiten, Diamine und/oder Dicarbonsäuren sind, die nach Abzug der Aminogruppen oder Carboxylgruppen Reste der Formel I

$$-R^1-O-\left[R^2-O\right]_n-R^3- \qquad \text{I}$$

haben, in der $R^1$, $R^2$ und $R^3$ jeweils gleich oder verschieden sind und einen Alkylenrest mit 2 bis 6 Kohlenstoffatomen, der Alkylreste mit 1 bis 3 Kohlenstoffatomen als Substituenten haben kann, bezeichnen und n für eine ganze Zahl von 1 bis 60 steht auf polyamidbildende Temperaturen unter Verdampfen von Wasser unter erhöhtem Druck erhitzt und die Dampfphase von der Polymerschmelze trennt, dadurch gekennzeichnet, daß man

a) eine wäßrige Lösung der Ausgangsstoffe mit einer Verweilzeit von 1 bis 10 min durch eine rohrförmige Vorkondensation, die mit Einbauten versehen ist, leitet, in der im ersten Drittel durch Erhitzen auf eine Temperatur von 250 bis 290°C unter einem Druck von 1 bis 10 bar unter Verdampfen von Wasser ein im wesentlichen aus einer Dampfphase und einem geschmolzenen Präpolymeren bestehendes Gemisch erhalten wird und in den folgenden zwei Dritteln der Vorkondensationszone die Dampfphase und das Präpolymere innig miteinander in Berührung gebracht werden,

b) in einer Trennzone das geschmolzene Präpolymere von der Dampfphase trennt,

c) das Präpolymere in einer Kondensationszone unter einem Druck von 1 bis 10 bar und einer Temperatur von 250 bis 290°C mit einer Verweilzeit von 5 bis 30 min unter Bildung eines Polymeren kondensiert,

d) das Polymere aus der Kondensationszone durch eine Austragszone unter Abtrennen der restlichen Wassermenge leitet und ein granulierfähiges Polymeres erhält,

e) das Polymere in fester Phase in einer Inertgasatmosphäre bei erhöhter Temperatur bis zur gewünschten Viskosität weiter kondensiert und

f) die in Stufe c) erhaltene Dampfphase in einer Kolonne in Wasserdampf und eine wäßrige Diamine enthaltende Lösung trennt und die wäßrige Diaminlösung in die Stufe a) zurückführt.

Das neue Verfahren hat den Vorteil, daß es leicht kontinuierlich durchführbar ist und die abgespaltenen Amine wieder in das Verfahren zurückgeführt werden. Weiter hat das neue Verfahren den Vorteil, daß die Schädigung des Polymeren in der Schmelze verhindert und ein Polymerisat mit verbessertem Weißgrad erhalten wird. Ferner hat das neue Verfahren den Vorteil, daß eine Entmischung der Copolymerisate vermieden wird.

Erfindungsgemäß geht man von wäßrigen Lösungen von Salzen von Diaminen und äquimolaren Mengen an Dicarbonsäuren, die zusätzlich Lactame oder die entsprechenden Aminocarbonsäuren enthalten können aus, wobei 1 bis 80 % der polyamidbildenden Einheiten, bezogen auf die Summe der polyamidbildenden Einheiten, Diamine und/oder Dicarbonsäuren sind, die nach Abzug der Aminogruppen oder Carboxylgruppen Reste der Formel I

$$-R^1-O-\left[R^2-O\right]_n-R^3- \qquad \text{I}$$

aufweisen, in der $R^1$, $R^2$ und $R^3$ jeweils gleich oder verschieden sind und einen Alkylenrest mit 2 bis 6 Kohlenstoffatomen, der Alkylreste mit 1 bis 3 Kohlenstoffatomen als Substituenten haben kann, bezeichnen und n für eine ganze Zahl von 1 bis 60 steht.

Bevorzugte Dicarbonsäuren haben die Formel II

$HOOC-R^4-COOH$,

in der $R^4$ einen Alkylenrest mit 2 bis 16 Kohlenstoffatomen oder einen 1,3- oder 1,4-Phenylenrest bezeichnet oder für einen Rest der Formel I steht, in der $R^1$, $R^2$ und $R^3$ sowie n die zuvor genannte Bedeutung haben. Besonders bevorzugt sind Dicarbonsäuren der Formel II, in der $R^4$ einen Alkylenrest mit 4 bis 8 Kohlenstoffatomen einen 1,3- oder 1,4-Phenylenrest bezeichnet oder für den Rest der Formel I, in der $R^1$, $R^2$ und $R^3$ jeweils gleich oder verschieden sein können und jeweils einen Alkylenrest mit 2 bis 4 Kohlenstoffatomen bezeichnen und n für eine ganze Zahl von 1 bis 20 steht. Geeignete Dicarbonsäuren sind beispielsweise Adipinsäure, Korksäure, Azelainsäuren oder Dodekandisäure, insbesondere Adipinsäure. Geeignete Dicarbonsäuren die Reste der Formel I enthalten sind beispielsweise Polyethylenglykol, Polypropylenglykol, Polyethylenpropylenglykol oder Polytetrahydrofuran mit dem genannten Polymerisationsgrad die endständig Carboxylgruppen haben.

Bevorzugte Diamine haben die Formel III

$H_2N-R^5-NH_2$ ,

in der $R^5$ für einen Alkylenrest mit 4 bis 16 Kohlenstoffatomen oder einen 1,3- oder 1,4-Phenylenrest oder einen Rest der Formel I steht, in der $R^1$, $R^2$ und $R^3$ sowie n die vorgenannte Bedeutung haben. Besonders bevorzugt sind Diamine der Formel III, in der $R^5$ für einen Alkylenrest mit 4 bis 8 Kohlenstoffatomen steht und die Reste der Formel I die für $R^4$ genannte besonders bevorzugte Bedeutung haben. Geeignete Diamine sind beispielsweise Tetramethylendiamin, Hexamethylendiamin, Octamethylendiamin oder Ethylenbis(3-aminopropyl)-ether, 1,3-Propylen-bis(2-aminoethyl)-ether ferner Polyethylenglykol, Polypropylenglykol oder Polytetrahydrofuran mit dem genannten Polymerisationsgrad n die endständig Aminogruppen haben.

Die wäßrigen Lösungen können zusätzlich Lactame, vorzugsweise Lactame mit 6 bis 12 Kohlenstoffatomen, insbesondere Caprolactam oder die den Lactamen entsprechenden $\omega$-Aminoalkancarbonsäuren mit 6 bis 12 Kohlenstoffatomen, insbesondere $\omega$-Aminocapronsäure enthalten. Der Zusatz von Caprolactam kann beispielsweise bis zu 90 Gew.-% der polyamidbildenden Verbindungen betragen.

Erfindungsgemäß sind 1 bis 80 %, insbesondere 5 bis 60 %, der polyamidbildenden Einheiten, bezogen auf die Summe der polyamidbildenden Einheiten (Diamine, Dicarbonsäuren und Lactame oder Aminocarbonsäuren) Diamine und/oder Dicarbonsäuren die nach Abzug der Amino- oder Carboxylgruppen Reste der Formel I haben, insbesondere der Formeln II und III, in denen $R^4$ oder $R^5$ jeweils den Rest der Formel I bezeichnet.

Es versteht sich, daß die Zusammensetzung der erzeugten Polyamide der Zusammensetzung der verwendeten Ausgangsstoffe entspricht.

Die wäßrige Lösung der Ausgangsstoffe erhält man zweckmäßig durch Umsetzen von äquimolaren Mengen der genannten Diamine und Dicarbonsäuren ggf. unter Zusatz von Lactamen, z.B. Caprolactam. Vorteilhaft haben diese Lösungen bei 20 °C einen pH-Wert von 7,5-8,0. Vorteilhaft geht man von 40 bis 70 gew.%igen, insbesondere 50 bis 65 gew.-%igen wäßrigen Lösungen von 80 bis 100 °C aus.

In Stufe a) wird eine wäßrige Lösung der Ausgangsstoffe mit einer Verweilzeit von 1 bis 10 min durch eine rohrförmige Vorkondensationszone, die mit Einbauten versehen ist, geleitet. Im ersten Drittel der

Vorkondensationszone wird durch Erhitzen auf eine Temperatur von 250 bis 290 °C unter einem Druck von 1 bis 10 bar unter Verdampfen von Wasser ein im wesentlichen aus einer Dampfphase und einem geschmolzenen Präpolymeren bestehendes Gemisch erhalten. In den folgenden zwei Dritteln der Vorkondensationszone wird die Dampfphase und das geschmolzene Präpolymere innig miteinander in Berührung gebracht. Hierbei werden die gleichen Druck- und Temperaturbedingungen wie im ersten Drittel eingehalten. Vorteilhaft beträgt die Verweilzeit in der Vorkondensationszone 60 bis 180 sec. Ferner hat es sich bewährt, wenn man einen Umsetzungsgrad von mindestens 94 % einhält.

Die Vorkondensationszone ist vorteilhaft als Röhrenbündel ausgebildet. Die Röhren sind mit Einbauten versehen, um eine große Oberfläche zu schaffen. Dies wird beispielsweise erreicht durch Bestücken mit Füllkörpern wie Raschigringen, Metallringen oder insbesondere Füllkörper aus Drahtnetz. Vorteilhaft beträgt die freie Oberfläche je Liter Reaktionsraum 0,7 bis 1,5 $m^2$.

Das Gemisch aus Präpolymeren und Dampf wird in einer Trennzone b in geschmolzenes Präpolymeres und eine Dampfphase getrennt. Hierbei werden zweckmäßig die in Stufe a) angewandten Drücke und Temperaturen eingehalten. Die Trennung erfolgt in der Regel von selbst aufgrund der physikalischen Unterschiede in einem Gefäß, wobei der untere Teil des Gefäßes vorteilhaft als Kondensationszone ausgebildet ist. Die freiwerdende Dampfphase besteht im wesentlichen aus Wasserdampf und Diaminen, die beim Verdampfen des Wassers freigesetzt wurden sowie ggf. geringen Mengen Lactamen sofern diese mitverwendet werden.

Das erhaltene Präpolymere, das entsprechend seinem Umsetzungsgrad aus niedermolekularem Polyamid und restlichen Mengen an nichtumgesetzten Ausgangsstoffen besteht und in der Regel eine relative Viskosität von 1.20 bis 1.32 hat wird in eine Kondensationszone c) geleitet. In der Kondensationszone wird die anfallende Schmelze bei einer Temperatur von 250 bis 290 °C und unter einem Überdruck von 1 bis 10 bar polykondensiert. Vorteilhaft werden die hierbei freiwerdenden Dämpfe zusammen mit der obengenannten Dampfphase abgetrennt. In der Polykondensationszone hält man eine Verweilzeit von 5 bis 30 min, insbesondere 7 bis 20 min ein.

Das in der Stufe c) erhaltene Polymere leitet man schmelzflüssig durch eine Austragszone d), insbesondere unter fortlaufender Ausbildung neuer Oberflächen, unter gleichzeitiger Entfernung des in der Schmelze enthaltenen Wassers. Geeignete Austragszonen sind beispielsweise Entgasungsextruder. Vorteilhaft hält man in der Austragszone eine Verweilzeit von höchstens 2 min, z.B. 40 bis 90 sec ein. Vorzugsweise beträgt die Temperatur in der Austragszone 260 bis 280 °C. Das erhaltene Polymere hat in der Regel eine relative Viskosität von 1.39 bis 1.53, gemessen 0,5 %ig in o-Dichlorbenzol/Phenol 1:1. Die so von Wasser befreite Schmelze wird dann in Stränge gegossen und granuliert.

In der Stufe e) wird dann das Polymere in fester Phase, z.B. in Form von Granulat in einer Inertgasatmosphäre wie Stickstoff oder Wasserdampf, insbeondere überhitzten Wasserdampf, vorzugsweise in Gegenstrom bei erhöhter Temperatur, z.B. bei 160 bis 190 °C, unterhalb des Schmelzpunktes des jeweiligen Polymeren bis zur gewünschten Viskosität kondensiert. Vorteilhaft verwendet man hierfür den am Kopf der Kolonne gemäß Stufe f) anfallenden Wasserdampf.

In der Stufe f) wird die in der Trennzone b) erhaltene Dampfphase in einer Kolonne in Wasserdampf und eine wäßrige Diaminlösung getrennt und die wäßrige Diaminlösung in Stufe a) zurückgeführt. Die Trennung der Dampfphase erfolgt vorteilhaft in einer Kolonne unter Rektifikation. Geeignete Kolonnen sind beispielsweise Füllkörperkolonnen, Glockenbodenkolonnen oder Siebbodenkolonnen mit 5 bis 15 theoretischen Böden. Die Kolonne wird zweckmäßig unter den identischen Druckbedingungen wie die Vorkondensationszone betrieben. Vorteilhaft gibt man am Kopf der Kolonne je kg Dampf 0,15 bis 0,3 Liter Wasser auf, um den Trenneffekt zu verbessern. Als Sumpf erhält man eine wäßrige Lösung an flüchtigen Diaminen, die in die Stufe a) zurückgeführt werden, während der am Kopf anfallende rektifizierte Wasserdampf vorteilhaft für die Festphasenkondensation verwendet wird.

Besonders bewährt hat sich das erfindungsgemäße Verfahren zur kontinuierlichen Herstellung von Polyamiden mit Etherbrücken in der Kette, wobei man von

A) 5 bis 100 Gew.-% eines Salzes aus Diaminen der Formel IV

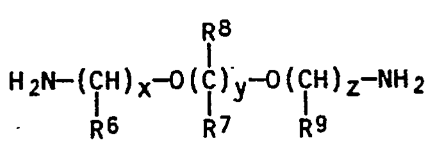

IV,

in der x, y und z gleich oder verschieden sein können und jeweils eine ganze Zahl von 2 bis 6 bezeichnen und $R^6$ bis $R^9$ gleich oder verschieden sein können und jeweils für ein Wasserstoffatom oder einen

Alkylrest mit 1 bis 3 Kohlenstoffatomen, insbesondere jedoch für Wasserstoffatome stehen und äquimolaren Mengen einer Dicarbonsäure der Formel II, in der $R^4$ einen Alkylenrest mit 2 bis 16 Kohlenstoffatomen oder einen 1,3- oder 1,4-Phenylenrest bezeichnet.

Besonders bevorzugt sind Salze aus Diaminen der Formel V

$H_2N-(CH_2)_3-O-(CH_2)_2-O-(CH_2)_3-NH_2$ V

und Adipinsäure, Terephthalsäure oder Isophthalsäure.

B) 5 bis 50 Gew.-% eines Salzes aus den vorgenannten Dicarbonsäuren der Formel II, in der $R^4$ einen Alkylenrest mit 2 bis 16 Kohlenstoffatomen oder einen 1,3- oder 1,4-Phenylenrest bezeichnet und äquimolaren Mengen an Diaminen der Formel III, in der $R^5$ für einen Alkylenrest mit 4 bis 16 Kohlenstoffatomen steht. Besondere Bedeutung haben Salze aus Hexamethylendiamin und Adipinsäure, Terephthalsäure oder Isophthalsäure erlangt.

C) 0 bis 90 Gew.-% eines Lactams mit 6 bis 12 Kohlenstoffatomen im Ring, insbesondere Caprolactam oder den entsprechenden $\omega$-Aminoalkancarbonsäuren mit 6 bis 12 Kohlenstoffatomen, insbesondere $\omega$-Aminocapronsäure.

Bei der Herstellung von Polyamiden aus den vorgenannten Ausgangsstoffen erhält man in den Stufen a) bis c) vorteilhaft eine Temperatur von 250 bis 270 °C und in der Stufe d) eine Temperatur von 260 bis 270 °C ein.

Andere bevorzugte Polyamide sind Copolyamide mit Polyethersegmenten. Hierbei geht man von den eingangs aufgeführten Ausgangsstoffen aus, wobei 2 bis 80 % der polyamidbildenden Einheiten, bezogen auf die Summe der polyamidbildenden Einheiten, Diamine und/oder Dicarbonsäuren die nach Abzug der Amino- oder Carboxylgruppen, Reste der Formel I haben, in der $R^1$, $R^2$ und $R^3$ gleich oder verschieden sein können und einen Alkylenrest mit 2 bis 6 Kohlenstoffatomen bezeichnen und n eine ganze Zahl von 2 bis 60 bedeutet, bevorzugt sind Dicarbonsäuren der Formel II und Diamine der Formel III. In bevorzugten Resten der Formel I bezeichnen $R^1$ und $R^3$ einen Alkylenrest mit 2 bis 4 Kohlenstoffatomen, insbesondere einen Ethylen- oder Propylenrest und $R^2$ einen Alkylenrest mit 2 bis 6 Kohlenstoffatomen, insbesondere einen Tetramethylenrest und n eine ganze Zahl von 5 bis 20. In bevorzugten Copolymeren haben 10 bis 50 % der polyamidbildenden Einheiten, bezogen auf die Summe der polyamidbildenden Einheiten, Diamine und/oder Dicarbonsäuren die nach Abzug der Amino- oder Carboxylgruppen Reste der Formel I. Bei der Herstellung solcher Copolymerisate hat es sich bewährt, in den Stufen a), b) und c) eine Temperatur von 270 bis 290 °C einzuhalten.

Die nach dem Verfahren der Erfindung erhältlichen Polyamide mit Etherbrücken in der Polymerkette eignen sich zur Herstellung von geformten Gebilden durch Spritzguß oder Extrusion z.B. von Formkörpern, Fäden oder Fasern.

Das Verfahren nach der Erfindung sei in folgenden Beispielen veranschaulicht:

Beispiele 1 bis 4

Diamine und Dicarbonsäure siehe Tab. 1 werden in Form ihrer reinen Monomeren im nahezu stöchiometrischen Verhältnis sowie ggf. Caprolactam in Wasser gemischt. Die Stöchiometrie wird mittels pH-Wert überprüft. Die wäßrige Lösung (pH = 7,7, Temperatur 95 °C, 50 gew.%ig) wird anschließend mit einer Geschwindigkeit entsprechend einer Polyamidmenge von 5,0 kg/h von oben in ein vertikal angeordnetes 3 m langes Rohr (Verdampferreaktor) eingeleitet. Das Rohr ist mit Raschigringen gefüllt und hat eine freie Oberfläche von 2,0 $m^2$. Im 1. Drittel des Rohres wird durch Beheizen auf 255 bis 260 °C das Lösungswasser sowie der größte Teil des bei der Reaktion freiwerdenden Wassers bei 5 bar verdampft. Dabei wird bereits ein Umsetzungsgrad von ≧ 94,0 % erreicht. In den verbleibenden zweiten Dritteln des Rohres erfolgt ein inniger Stoffaustausch bei gleichbleibender Temperatur zwischen teilweise in der Gasphase befindlichen flüchtigen Aminkomponenten (s. Tab. 1), Wasserdampf und fortlaufend polykondensierender Präpolymerschmelze. Die Temperatur des Reaktionsgemisches beträgt 256 °C. Das aus der Vorkondensationszone austretende zweiphasige Gemisch wird in einem Abscheidegefäß in Schmelze und Brüden aufgetrennt.

Der erreichte polykondensationsgrad des Präpolymeren ist in Tab. 1 aufgezeigt. Die Polymerschmelze verweilt noch 15 Minuten im Abscheider (255 bis 260 °C, 5 bar), der als Polykondesationszone dient und wird dann kontinuierlich einer Austragsschnecke mit Ausdampfzone zugeführt, auf Normaldruck entspannt, entgast, in Stränge gegossen, in einem Wasserbad verfestigt und granuliert. Die Temperatur während des Entgasungsvorganges beträgt 265 °C die Verweilzeit im Entgasungsextruder 1 Minute. Der Polykondensationsgrad des jeweiligen granulatförmigen Präpolymeren ist in Tab. 1 dargestellt.

Die aminhaltigen Brüden werden einer Kolonne zugeführt, deren Rektifizierteil 10 theoretischen Böden

entspricht und aufgetrennt (s. Angaben in Tab. 1). Der gesamte Polykondensationsteil steht unter einem Druck von 5 bar, der über eine Druckhaltevorrichtung nach der Kolonne eingehalten wird. Zur Verstärkung der Trennwirkung wird die Kolonne mit einer Wassermenge von ca. 1 l/h beregnet. Am Kolonnenkopf stellt sich dabei eine Temperatur von 152° C ein. Nach der Rektifikation befindet sich die flüchtige Aminkomponente nahezu quantitativ im Sumpf der Kolonne, sie wird kontinuierlich mittels Dosierpumpe in den Verdampferreaktor rückgeführt und mit der wäßrigen Monomerlösung vermischt.

Das granulatförmige Präpolymere wird anschließend in der festen Phase mit überhitztem Wasserdampf, der aus der Kolonne abgezogen wird und als Wärmeträger dient, zu den gewünschten Molekulargewichten nachkondensiert.

Die Bedingungen der Nachkondensation sowie die Beschaffenheit der erhaltenen Endprodukte ist der Tab. 1 zu entnehmen. In allen aufgezeigten Beispielen wird ein farbloses Polymergranulat von hoher Reinheit erhalten.

Tab. 1:

| Beispiele Nr. | 1 | 2 | 3 | 4 |
|---|---|---|---|---|
| Zusammensetzung[1] Gew.-% | 100 A | 50 A/50 B | 75 B/25 A | 87,5 B/12,5 A |
| **Polykondensationsgrad nach Verdampferreaktor** | | | | |
| $\eta_{rel}$[2] | 1,20 | 1,32 | 1,28 | 1,30 |
| Endgruppen: -COOH mäq/kg | 130 | 141 | 144 | 147 |
| $-NH_2$ " | 156 | 153 | 174 | 177 |
| **Polykondensationsgrad nach Abscheider** (Präpolymergranulat) | | | | |
| $\eta_{rel}$[2] | 1,39 | 1,52 | 1,50 | 1,53 |
| Endgruppen: -COOH mäq/kg | 90 | 103 | 104 | 107 |
| $-NH_2$ " | 116 | 116 | 134 | 124 |
| **Aminkomponente** | | | | |
| Brüden[3] (%) | 0,8 | 1,5 | 2,8 | 3,1 |
| Sumpf[3] (%) | 6,1 | 12,0 | 17,0 | 21,0 |
| Nach Kolonne[3] (%) | < 0,001 | < 0,001 | < 0,001 | < 0,001 |
| **Bedingungen der Festphasenkondensation** | | | | |
| Temperatur (°C) | 160 | 165 | 165 | 165 |
| Verweilzeit (h) | 40 | 20 | 20 | 20 |
| **Polykondenstionsgrad Endprodukt** | | | | |
| $\eta_{rel}$[2] | 1,62 | 1,75 | 1,78 | 1,82 |
| Endgruppen: -COOH mäq/kg | 26 | 57 | 55 | 58 |
| $-NH_2$ " | 39 | 55 | 87 | 69 |
| Schmelzpunkt (DSC, °C) | 172 | 188 | 241 | 249 |

1) Komponente A
Salz aus 4,7-Dioxadecandiamin-1,12 und Adipinsäure
Komponente B
AH-Salz

2) $\eta$rel gemessen 0,5 %ig in o-Dichlorbenzol/Phenol 1/1
3) %-Angaben bezogen auf Polyamid

Beispiele 5 bis 7

Die Diamine und Dicarbonsäuren siehe Tab. 2 werden in Form ihrer reinen Monomeren im nahezu stöchiometrischen Verhältnis sowie ggf. Caprolactam in Wasser gemischt. Die Stöchiometrie wird mittels pH-Wert überprüft. Die wäßrige Lösung (pH = 7,7, Temperatur 95° C, 50 gew.-%ig) wird anschließend mit einer Geschwindigkeit entsprechend einer Polyamidmenge von 5,0 kg/h von oben in ein vertikal angeordnetes 3 m langes Rohr (Verdampferreaktor) eingeleitet. Das Rohr ist mit Raschigringen gefüllt und hat eine freie Oberfläche von 2,0 $m^2$. Im 1. Drittel des Rohres wird durch Beheizen auf 281 bis 285° C das Lösungswasser sowie der größte Teil des bei der Reaktion freiwerdenden Wassers verdampft. In den verbleibenden zwei Dritteln des Rohres erfolgt ein inniger Stoffaustausch bei gleichbleibender Temperatur zwischen teilweise in der Gasphase befindlichen flüchtigen Aminkomponenten (s. Tabelle 2), Wasserdampf und fortlaufend polykondensierender Präpolymerschmelze. Die Temperatur des Reaktionsgemisches beträgt 281 bis 285° C, der Druck 5 bar. Das aus der Polykondensationszone austretende zweiphasige Gemisch wird in einem Abscheidegefäß in Schmelze und Brüden aufgetrennt.

Der erreichte Polykondensationsgrad des Präpolymeren ist in Tab. 2 aufgezeigt. Die Polymerschmelze verweilt noch 15 Minuten im Abscheider, der ebenfalls als Polykondensationszone dient bei 281 bis 285° C und 5 bar und wird dann kontinuierlich einer Austragsschnecke mit Ausdampfzone zugeführt, auf Normaldruck entspannt, entgast, in Stränge gegossen, in einem Wasserbad verfestigt und granuliert. Die Temperatur während des Entgasungsvorgangs beträgt 275° C, die Verweilzeit im Entgasungsextruder höchstens 2 Minuten. Der Polykondensationsgrad des jeweiligen granulatförmigen Präpolymeren ist in Tab. 2 dargestellt.

Die aminhaltigen Brüden werden einer Kolonne zugeführt, deren Rektifizierteil 10 theoretischen Böden entspricht und aufgetrennt (s. Angaben in Tab. 2). Der gesamte Polykondensationsteil steht unter einem Druck von 5 bar, der über eine Druckhaltevorrichtung nach der Kolonne eingehalten wird. Zur Verstärkung der Trennwirkung wird die Kolonne mit einer Wassermenge von ca. 1 l/h beregnet. Am Kolonnenkopf stellt sich dabei eine Temperatur von 152° C ein. Nach der Rektifikation befinden sich flüchtige Aminkomponenten nahezu quantitativ als wäßrige Lösung im Sumpf der Kolonne. Diese wird kontinuierlich mittels Dosierpumpe in die Polykondensationszone vor dem Verdampferreaktor rückgeführt und mit der wäßrigen Ausgangslösung vermischt.

Das granulatförmige Präpolymere wird anschließend in der festen Phase mit überhitztem Wasserdampf aus der Kolonne als Wärmeträger zu den gewünschten Molekulargewichten nachkondensiert.

Die Bedingungen der Nachkondensation sowie die Beschaffenheit der erhaltenen Endprodukte ist der Tab. 2 zu entnehmen. In allen aufgezeigten Beispielen wird ein farbloses Polymergranulat mit hoher Reinheit erhalten.

Tabelle 2 Beispiele 5 bis 7

| Beispiel Nr. | 5 | 6 | 7 |
|---|---|---|---|
| Zusammensetzung [1] | | | |
| Gew.% Komp. A | 30 | 30 | 50 |
| Gew.% Komp. B | 70 | -- | 50 |
| Gew.% Komp. C | -- | 70 | -- |
| Polykondesationsgrad nach Verdampferreaktor | | | |
| ηrel [2] | 1,29 | 1,22 | 1,23 |
| Endgruppen-COOH mäq/kg | 131 | 134 | 116 |
| $-NH_2$ mäq/kg | 138 | 147 | 162 |
| Polykondensationsgrad nach Entgasungsextruder | | | |
| ηrel [2] | 1,52 | 1,41 | 1,39 |
| Endgruppen-COOH mäq/kg | 99 | 102 | 81 |
| $-NH_2$ mäq/kg | 109 | 115 | 129 |
| Flüchtige Komponenten | | | |
| Brüden (%) [3] | 2,1 (HMD) | 3,4 (Caprolactam) | 1,8 (HMD) |
| Sumpf (%) [3] | 17 (HMD) | 25 (Caprolactam) | 12 (HMD) |
| nach Kolonne (%) [3] | < 0,05 (HMD) | < 0,001 (Caprolactam) | < 0,001 (HMD) |
| Bedingungen der Festphasen Polykondensation | | | |
| Temp. °C | 190 | 190 | 190 |
| Zeit (h) | 20 | 24 | 24 |
| Endprodukt ηrel [2] | 2,34 | 1,94 | 1,73 |
| Endgruppen-COOH mäq/kg | 51 | 38 | 30 |
| $-NH_2$ mäq/kg | 46 | 36 | 54 |

1) Komponente A

Salz aus Bisaminopropylpolytetrahydrofuran 750 und Adipinsäure in Form einer konzentrierten wäßrigen Lösung (% Angabe bezogen auf den Feststoffgehalt)

Komponente B

AH-Salz

Komponente C

Caprolactam

2) Gemessen 0,5 %ig in Phenol/o-Dichlorbenzol 1:1

3) Prozentangaben bezogen auf Polymer

## Ansprüche

1. Verfahren zur kontinuierlichen Herstellung von linearen Polyamiden mit Etherbrücken in der Polymerkette, bei dem man wäßrige Lösungen von Salzen aus Diaminen und äquimolaren Mengen an Diacarbonsäuren, die zusätzlich Lactame oder die entsprechenden Aminocarbonsäuren enthalten können, wobei 1 bis 80 % der polyamidbildenden Einheiten, bezogen auf die Summe der polyamidbildenden Einheiten, Diamine und/oder Dicarbonsäuren sind, die nach Abzug der Aminogruppen oder Carboxylgruppen Reste der Formel I

$$-R^1-O-\left[R^2-O\right]_n-R^3- \qquad \text{I}$$

haben, in der $R^1$, $R^2$ und $R^3$ jeweils gleich oder verschieden sind und jeweils einen Alkylenrest mit 2 bis 6 Kohlenstoffatomen, der Alkylreste mit 1 bis 3 Kohlenstoffatomen als Substituenten haben kann, bezeichnen und n für eine ganze Zahl von 1 bis 60 steht, auf polyamidbildende Temperaturen unter Verdampfen von Wasser unter erhöhtem Druck erhitzt und die Dampfphase von der Polymerschmelze trennt, dadurch gekennzeichnet, daß man

a) eine wäßrige Lösung der Ausgangsstoffe mit einer Verweilzeit von 1 bis 10 Minuten durch eine rohrförmige Vorkondensationszone, die mit Einbauten versehen ist, leitet, in der im ersten Drittel durch Erhitzen auf eine Temperatur von 250 bis 290 °C unter einem Druck von 1 bis 10 bar unter Verdampfen von Wasser ein im wesentlichen aus einer Dampfphase und einem geschmolzenen Präpolymeren bestehendes Gemisch erhalten wird und in den folgenden zwei Dritteln der Vorkondensationszone die Dampfphase und das Präpolymere innig miteinander in Berührung gebracht werden,

b) in einer Trennzone das geschmolzene Präpolymere von der Dampfphase trennt,

c) das Präpolymere in einer Kondensationszone unter einem Druck von 1 bis 10 bar und einer Temperatur von 250 bis 290 °C mit einer Verweilzeit von 5 bis 30 min unter Bildung eines Polymeren kondensiert,

d) das Polymere aus der Kondensationszone durch eine Austragszone unter Abtrennen der restlichen Wassermenge leitet und ein granulierfähiges Polymeres erhält,

e) das Polymere in fester Phase in einer Inertgasatmosphäre bei erhöhter Temperatur bis zur gewünschten Viskosität weiter kondensiert und

f) die in Stufe c) erhaltene Dampfphase in einer Kolonne in Wasserdampf und eine Diamine enthaltene wäßrige Lösung trennt und die wäßrige Diaminlösung in die Stufe a) zurückführt.

2. Verfahren nach Anspruch 1, dadurch gekennzeichnet, daß man in der Stufe a) eine Verweilzeit von 60 bis 180 sec einhält.

3. Verfahren nach den Ansprüchen 1 oder 2, dadurch gekennzeichnet, daß man in der Stufe c) eine Verweilzeit von 7 bis 20 Minuten einhält.

4. Verfahren nach einem der Ansprüche 1 bis 3, dadurch gekennzeichnet, daß man in Stufe d) unter fortlaufender Ausbildung neuer Oberflächen Wasserdampf abtrennt.

5. Verfahren nach einem der Ansprüche 1 bis 4, dadurch gekennzeichnet, daß man in Stufe f) die Destillation der Dampfphase unter dem in der Stufe a) angewandten Druck durchführt.

6. Verfahren nach einem der Ansprüche 1 bis 5, dadurch gekennzeichnet, daß man in Stufe e) das feste Polymere unter Mitverwendung des in Stufe f) erhaltenen Wasserdampfs weiter kondensiert.

7. Verfahren nach einem der Ansprüche 1 bis 6, dadurch gekennzeichnet, daß man Salze aus Dicarbonsäuren der Formel II

$HOOC\text{-}R^4\text{-}COOH$ II,

in der $R^4$ einen Alkylenrest mit 2 bis 16 Kohlenstoffatomen oder einen 1,3- oder 1,4-Phenylenrest bezeichnet oder für den Rest der Formel I steht und äquimolaren Mengen an Diaminen der Formel III

$H_2N\text{-}R^5\text{-}NH_2$ III,

in der $R^5$ für einen Alkylenrest mit 4 bis 16 Kohlenstoffatomen oder einen 1,3- oder 1,4-Phenylenrest oder den Rest der Formel I steht sowie gegebenenfalls Lactame mit 6 bis 12 Kohlenstoffatomen oder den entsprechenden $\omega$-Aminocarbonsäuren, wobei 2 bis 80 % der polyamidbildenden Einheiten, bezogen auf die Summe der polyamidbildenden Einheiten, Diamine und/oder Dicarbonsäuren mit Resten der Formel I sind, verwendet.